# EUROPEAN PATENT SPECIFICATION

(11) **EP 3 536 951 B1**
(45) Date of publication and mention of the grant of the patent: **16.12.2020**
(21) Application number: 19160437.0
(22) Date of filing: 04.03.2019
(51) Int. Cl.: F03D 80/50, B66C 23/04, B66C 23/20

(54) **LIFTING GEAR FOR USE IN CONFINED SPACES**
HEBEAUSRÜSTUNG ZUR VERWENDUNG IN BEENGTEN RÄUMEN
ENGRENAGE DE LEVAGE POUR UNE UTILISATION DANS DES ESPACES CONFINÉS

(30) Priority: 06.03.2018 DE 102018001762
(43) Date of publication of application: 11.09.2019
(73) Proprietor: Siemens Gamesa Renewable Energy Service GmbH, 22297 Hamburg (DE)
(72) Inventor: Pravinkumar, Mathialagan, 562123 Gollahalli, Bangalore (IN)
(74) Representative: Glawe, Delfs, Moll

(56) References cited:
- WO-A1-2009/058071
- US-A1- 2008 035 594
- US-A1- 2013 089 405

## Description

The invention relates to a lifting gear for use in confined spaces, especially within wind energy turbines.

Modern wind energy turbines typically have a nacelle pivotally mounted on top of a tower, which holds the rotor axis of a rotor with usually three rotor blades that drives a generator. Various components required for a safe operation of the wind turbine are located in the nacelle, the rotor hub and/or the blade root of the rotor blades. These components may be directly linked to the energy production, e.g. parts of the converter, essential for controlling the wind energy turbine, e.g. pitch actuators, or serve as auxiliary equipment for allowing the wind energy turbine to operate under certain conditions, e.g. means for Hot-Air-De-Icing (HAD).

In certain cases, components need to be installed or replaced in a fully erected and completed wind energy turbine. For example, a defect or obsolete component needs to be replaced or a wind energy turbine is to be updated by installing new components as retrofit, e.g. components for HAD to allow year-round operation of a wind energy turbine which otherwise has downtimes due to icing not foreseen when erecting the turbine.

To install new components in the nacelle, the rotor hub or the blade root of one of the rotor blades, the components first need to be lifted to the nacelle before being put in place.

For getting new components to the nacelle, generally two approaches are known. In the first approach, the component to be installed is lifted to the nacelle by means of a winch, whose rope is guided through the yaw bearing and within the tower of the wind energy turbine. Once in the nacelle, the component needs to be solely manhandled, especially in case it needs to be moved further into the rotor hub.

Alternatively and as shown e.g. in WO 2008/069818 A1 or US 2014/0073134 A1, a crane may temporarily mounted on the outside of the nacelle or the rotor hub for lifting a required component from the ground and lowering it into the turbine through a roof hatch. The crane may be able to assist moving the component around in the turbine, as long as the motion range is beneath the roof hatch. Otherwise, the component needs to be solely manhandled, especially in case the component needs to be moved further into the rotor hub.

For moving new or replaced components around in the nacelle of a wind energy turbine and especially in case it needs to be moved further into the rotor hub, the state of the art largely relies on manhandling. Especially with heavy components, this can be disadvantageous.

Document WO 2011/150930 A1 describes a flexible articulated jib arm that might be used for moving heavy equipment around a horizontal plane. The jib arm comprises a series of vertically extending segments, wherein adjacent segments are interconnected pivotally in a horizontal plane for the attachment element being freely movable and alignable in a horizontal plane in respect to a mounting element. In order to for the jib arm not to start swiveling unintentionally and on its own, the vertically extending segments need to be oriented parallel to the force of gravity. This required orientation solely depends on the correct alignment of the mounting element and thus the interface provided for the mounting element to be mounted to.

Especially in the rotor hub and the blades connected thereto, due to them being rotatable around various axes, usually no interface can be provided that guarantees a mounting element attached thereto having the required alignment. As a result, flexible articulated jib arms generally known in the state of the art are currently not usable for moving around components in the rotor hub and/or the rotor blade roots.

Therefore, it is an object of the present invention to provide lifting gear, which assists handling of components in the confined and closed-off spaces of the rotor hub and/or the blade root of a mounted rotor blade of a wind turbine.

This problem is solved by a lifting gear according to the main claim. Preferred embodiments are the subject matter of the dependent claims.

The invention, hence, concerns a lifting gear for use in the confined spaces of a rotor hub and/or the blade roots of a wind energy turbine, comprising a mounting element and an attachment element for attaching a lifting tool, wherein the mounting element and the attachment element are connected by a series of vertically extending segments, wherein adjacent segments are interconnected pivotally in a horizontal plane for the attachment element being freely movable and alignable in a horizontal plane in respect to the mounting element, wherein the mounting element comprises an upper fixing point and a lower fixing point, wherein position of the lower fixing point relative of to the upper fixing point is adjustable along a circular path around the upper fixing point.

In context of the invention, the directions "vertical" and "horizontal" relate to the lifting gear properly installed, i.e. especially in regard to orientation.

The inventive lifting device comprises a mounting element for mounting the device. While the interface, the mounting element may be attached to, can generally be a wall, a vertical beam, gratings or the like, the inventive lifting gear is especially suited to be attached to an interface within rotor hub and/or the blade roots of a wind energy turbine. The invention is based on the insight that even though a rotor hub and the blade roots of a wind energy turbine have certain maintenance positions, which are attained before starting any actual maintenance, by e.g. using drive systems and/or brakes to move and secure the rotor hub and the blade roots in, the actual positions of the rotor hub and/or the blade roots often does not exactly meet the maintenance position but deviates slightly therefrom. As a result, simply attaching a prior art's lifting gear with a series of pivotally interconnected segments would result in unintended swiveling movement of the lifting gear, which would generally make the prior art lifting gear unsuitable for the use in the rotor hub and/or the roots of the rotor blades of a wind energy turbine.

With the present inventions, however, the mounting element is designed to counter the effects of imprecise positioning of the rotor hub and/or the blade roots for maintenance. For this, the mounting element comprises an upper fixing point and a lower fixing point, wherein the lower fixing point is adjustable along a circular path around the upper fixing point. By correctly adjusting the lower fixing point, a vertical alignment of the pivotally interconnected segments of the lifting gear can be calibrated. Due to the lower fixing point being adjustable on a circular path around the upper fixing point, the distance between the two fixing points remains constant independent from the actual position of the lower fixing point. Thus, it is sufficient for the interface at the rotor hub and/or the blade roots to provide two attachment points in the very same relative distance.

In a preferred embodiment, the mounting element comprises a number of alternative lower fixing points arranged on a circular path around the upper fixing point. By selecting one of the number of alternative lower fixing points, the lower fixing point can been regarded as being adjustable in order to ensure a vertical alignment of the pivotally interconnected segments of the lifting gear, thus avoiding unintentional swiveling.

In an alternative preferred embodiment, the lower fixing point is arranged on a movable lower fixing element, which is freely lockable in any position along a circular path around the upper fixing point. By locking the lower fixing element in a suitable position, a vertical alignment of the pivotally interconnected segments of the lifting gear can be ensured.

In order to facilitate the handling of a component in a confined and closed space, the mounting element and the attachment element are interconnected by a series of segments that in turn are pivotally interconnected similar to a link chain. However, the degree of freedom between adjacent segments and thus for the whole interconnection between the mounting and the attachment element is limited to the horizontal plane. In order to be able to resist the weight of the component attached to the attachment element either directly or by means of a lifting tool, the segments are vertically extending so that the series of segments provides for sufficient stiffness in a vertical direction.

Due to the series of pivotally interconnected segments, in general the attachment element may be freely moved and orientated in a horizontal plane in respect to the mounting element, as long as the distance between said two elements is smaller than the length of the series of segments.

Preferably, the segments are generally tubular with connecting elements on opposite sides of the outer circumference for pivotally interconnecting adjacent segments. This way, the segments may have a suitable horizontal expansion with the required rigidity, while at the same time being lightweight.

For the pivotal connecting between two segments the segments preferably each comprise as least one, preferably at least two coaxial pivot pins facing the same direction and a corresponding number of bushings with an open end for receiving the pivot pins of an adjacent segment as connecting elements. The pivot pins of one segment may interact with the bushing of the adjacent segment to form a pivotal connection. Due to the design of the pivotal connection, the series of segments may easily be disassembled by lifting one segment or a group of segments in order to pull the pivot pins of one pivotal connection out of the appropriate bushings. This allows for easy assembly, disassembly and transportation of the lifting gear. The assembly and disassembly in this case might even be tool-less.

It is preferred that the first segment of the series of segments is pivotally connected to the mounting element and/or the last segments of the series of segments is pivotally connected to the attachment element. If this is the case, said one or two connection(s) also contribute to the movability of the whole lifting gear. It is preferred, if said one or two connection(s) is arranged similarly to the pivotal connections between two adjacent segments of the series of segments, i.e. the mounting element and/or the attachment element may be configured to interact with the connecting elements of the first and/or last segment to provide said pivotal connection. For example, the mounting element might comprise bushings for the pivot pins of the first segment to be inserted, while the attachment element might comprise pivot pins to be inserted into the bushing of the last segment.

Alternatively connecting the attachment element comparatively to the interconnections between two adjacent segments, the attachment element might comprise a cylindrical section to be introduced into a tubular part of the last segment. In this embodiment, the cylindrical section of the attachment element is inserted in said tubular part of the last segment, which may readily be provided in case of a generally tubular form of the segments. Due to the generally circular interaction surface, the attachment element may even be rotatable in the last segment.

It is preferred that the attachment element is height-adjustable. This may, for example, be achieved by a swivel mechanism for a cantilever arm with a horizontal swivel axis or a vertical linear guiding. In case of the attachment element having a cylindrical section to be inserted into a tubular part of the last segment, said height-adjustability may be achieved by limiting the insertion depth, i.e. by means of blocking elements.

While the ability of the segments to pivot among each other is necessary for the attachment element to be freely movable and orientable in respect to the mounting element, in certain situation fixing the attachment element in its current state may be desirable. It is thus preferred that the relative position of two adjacent segments is electively lockable. By locking the relative position of all adjacent segments as well as between the first and/or last segment and the mounting and/or attachment element, the relative position between the mounting element and the attachment element may be fixed at times. Various options to e.g. temporarily preventing a pivotal movement of a pivot pin in a bushing are known and might readily be applied to the inventive lifting gear.

The lifting gear might comprise a hand lifting device, preferably a hand chain hoist that may be provided on the attachment element. As already mentioned above in context with a preferred embodiment, but also independently therefrom, it is preferred that adjacent segment are detachable from each other tool-less. As a result, the inventive lifting gear may easily be disassembled into smaller assembly units that might facility the handling and transport of the lifting gear when not in use.

The invention will now be described in further detail in regard to the enclosed figures:
- Figure 1a, b:: a schematic drawing of a first exemplary embodiment of the inventive lifting gear with a first exemplary mounting element;
- Figure 2a, b:: a schematic drawing of a second exemplary embodiment of the inventive lifting gear with a second exemplary mounting element;
- Figures 3-7:: an exemplary use case of the first exemplary embodiment according to figure 1;
- Figures 8-9:: an exemplary use case of the second exemplary embodiment according to figure 2; and
- Figure 10:: a disassembled and boxed lifting gear.

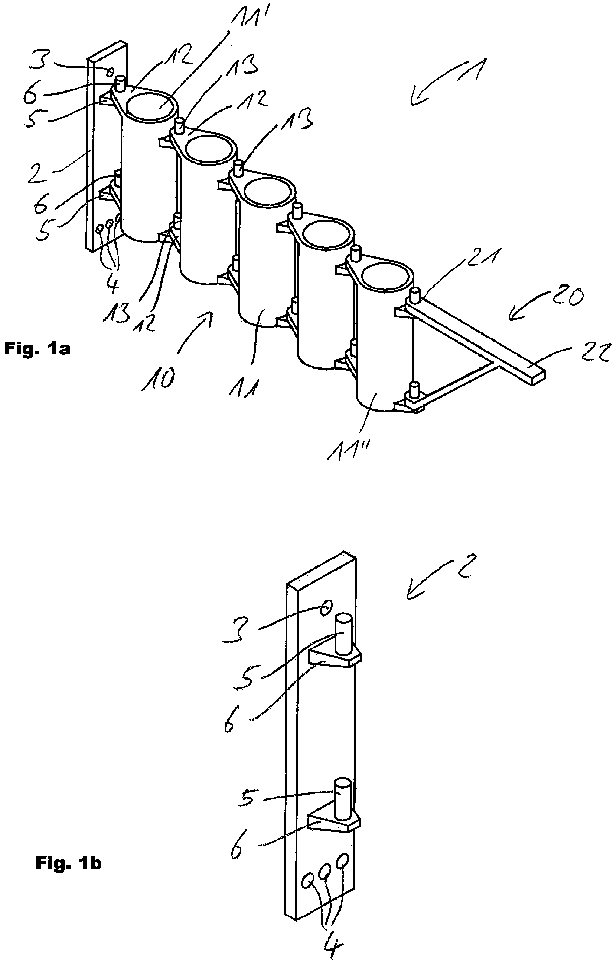

In figure 1a, b, a first embodiment of a first lifting gear 1 with a first exemplary mounting element 2 is shown. Figure 1a shows the whole lifting gear 1, while figure 1b details the mounting element 2.

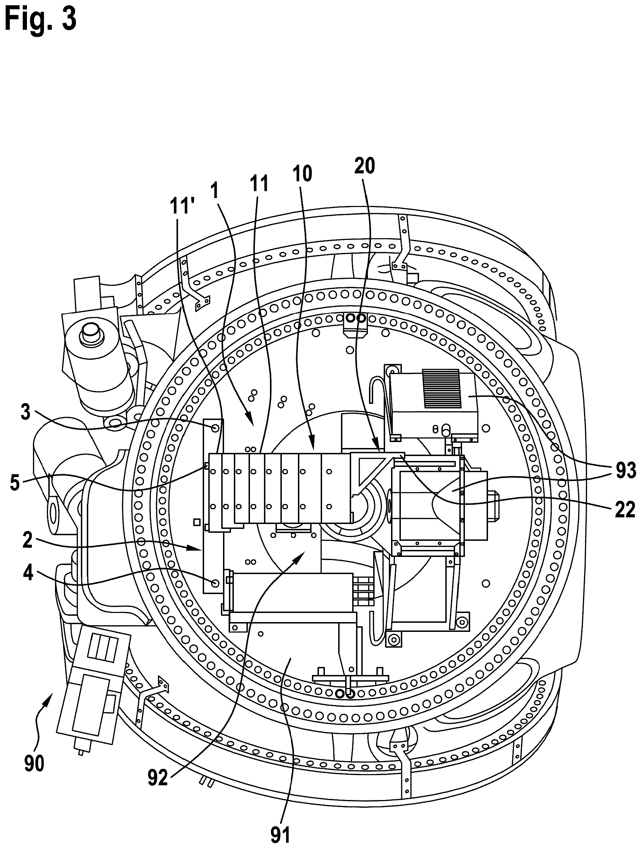

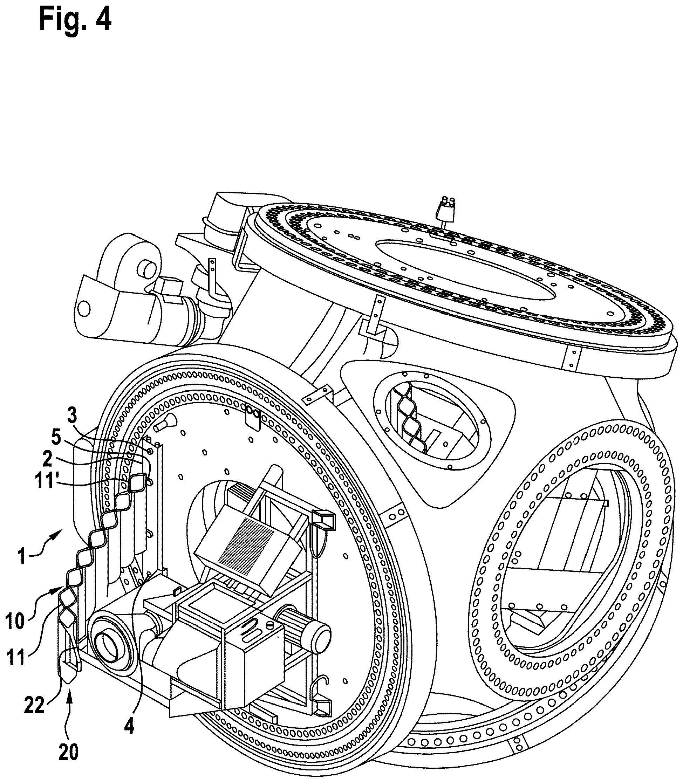

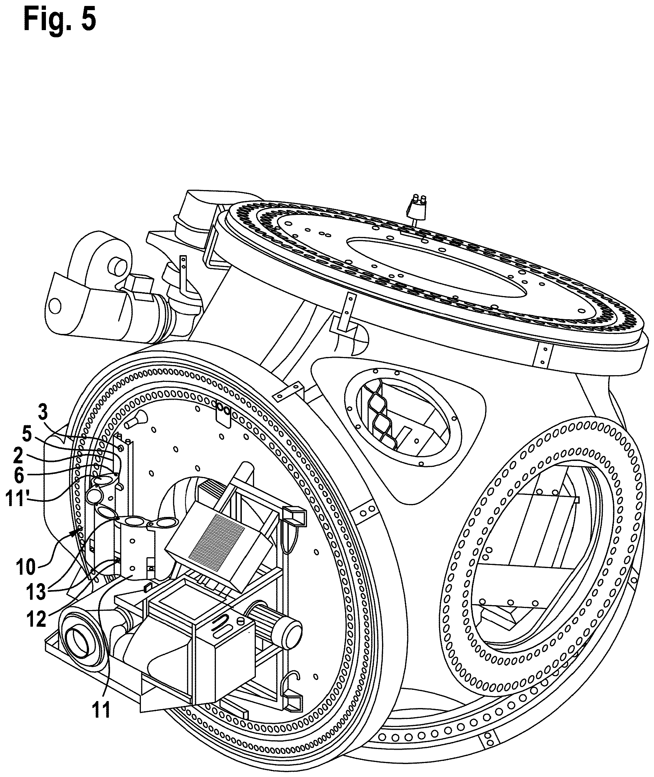

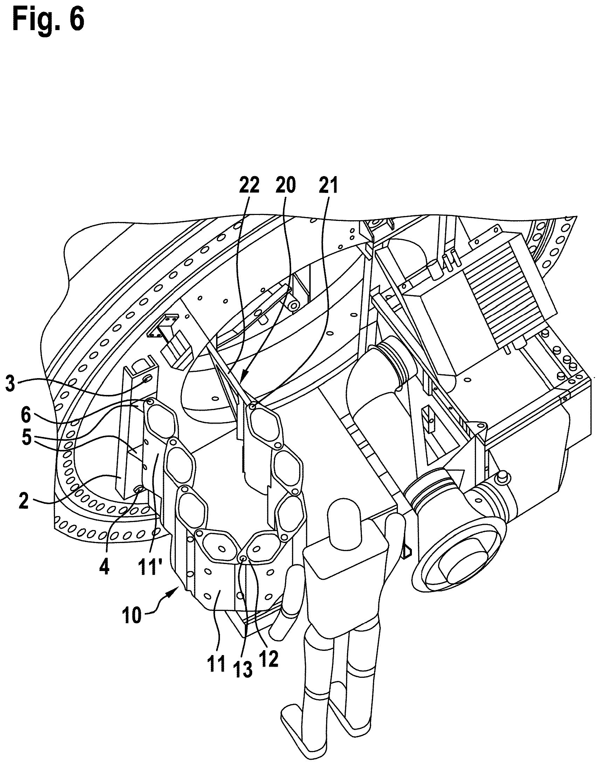

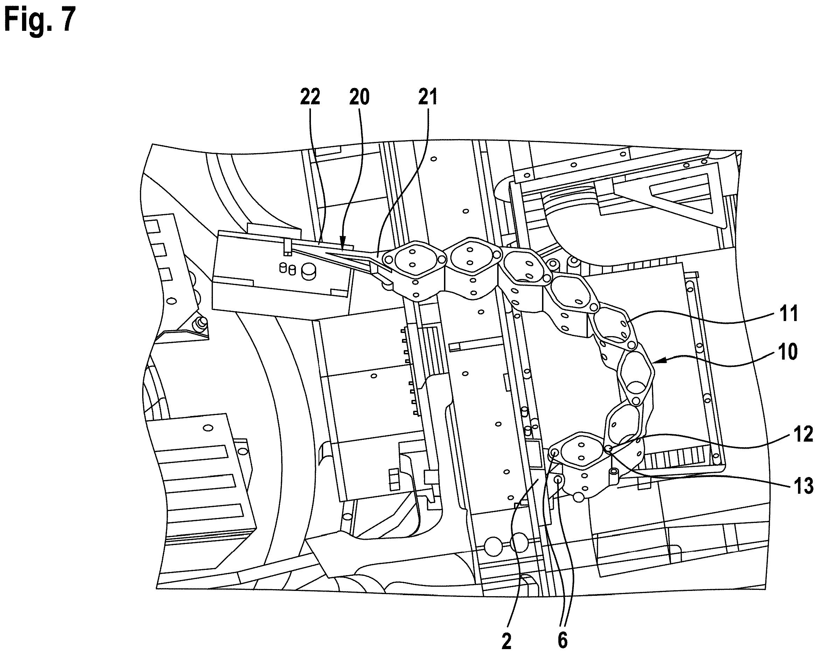

The lifting gear 1 comprises a mounting element 2 that is detachably fixed to e.g. the blade root platform 91 (cf. figures 3-7) via an upper and a lower fixing point 3, 4 by means of bolts. While there is only one upper fixing point 3, there are three lower fixing points 4 arranged on a circular path around the upper fixing point 3. By using the appropriate of the lower fixing points 4, a near vertical alignment of the mounting element 2 can be achieved in different use cases. On the mounting element 2, there are two ledges 5, each with a vertically protruding pivot pin 6 on a common vertically aligned axis.

On these pivot pins 6, a first segment 11' of a series 10 of virtually identical segments 11 is pivotally mounted. The segments 11 of the series 10 are vertically extending and of generally tubular shape. On one side of the outer circumference, the segments 11 each comprise two protrusions forming bushings 12 for receiving pivot pins 6, 13, while on the opposite side there are two upwardly facing and axially aligned pivot pins 13.

By inserting the pivot pins 6 of the mounting element 2 into the bushings 12 of the first segment 11', the first segment 11' can pivot in respect to the mounting element 2 around a vertical axis. Same is true for each subsequent segment 11, 11" in respect to their individual precursor segment 11, 11', since the connection between two adjacent segments 11, 11' is similarly pivotable around a vertical axis.

The lifting gear 1 further comprises an attachment element 20 that provided with two bushings 21 in order to be pivotally connected to the last segment 11" of the series 10 of segments 11, analogously to the interconnection between two adjacent segments. The attachment element 20 comprises a horizontally extending cantilever arm 22. On its outer end, e.g. hoisting cables may be attached thereto.

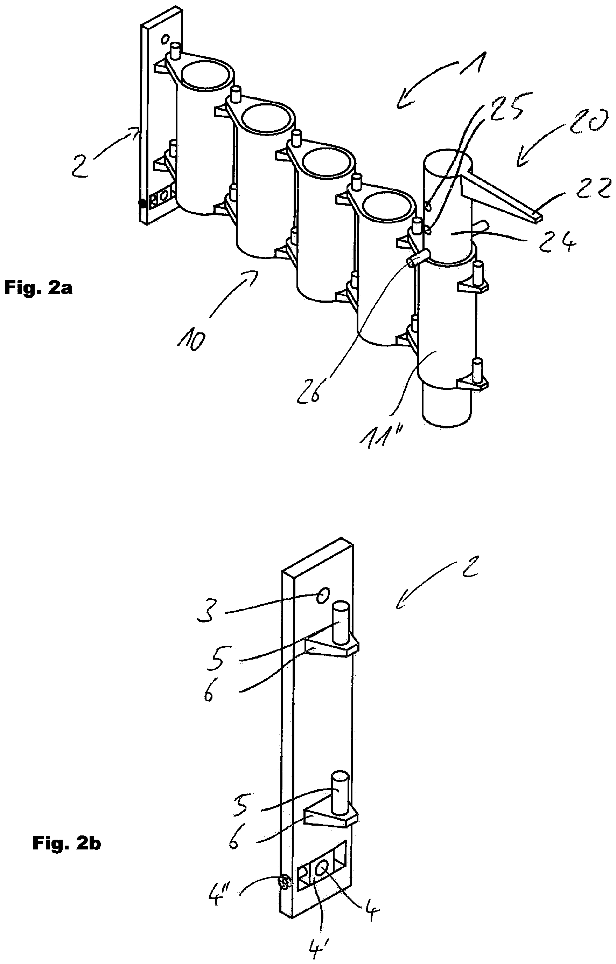

Apart from the mounting element 2 and the attachment element 20, the second embodiment shown in figure 2 is identical to the one of figure 1 as described above. Again, figure 2a shows the lifting device 1, while figure 2b is focused on the mounting element 2.

In figure 2, the mounting element 2 has an upper fixing point 3 and a lower fixing point 4. The lower fixing point 4 is arranged in a lower fixing element 4', which is movable along a circular path around the upper fixing point 3. In order to move and secure the lower fixing element 4' and thus the lower fixing point 4 in a desired position in which the segments 11 of the lifting device 1 are aligned vertically, a set screw 4" is provided.

The attachment element 20 of the second embodiment has a cylindrical section 24 to be introduced into the tubular part of the last segment 11" of the series of segments 10. At its top end, the attachment element 20 is provided with a horizontally extending cantilever arm 22.

The cylindrical section 24 comprises various vertically arranged traverse holes 25 for receiving a cylindrical pin 26, which might then glide on the top surface of the last segment 11' for the attachment element 20 to still be rotatable in respect to the last segment 11'. By utilizing different traverse holes 25, the actual height of the attachment element 20 and it cantilever arm 22 can be adjusted. A hand chain hoist (not shown) may be attached to the outer end of the cantilever arm 22.

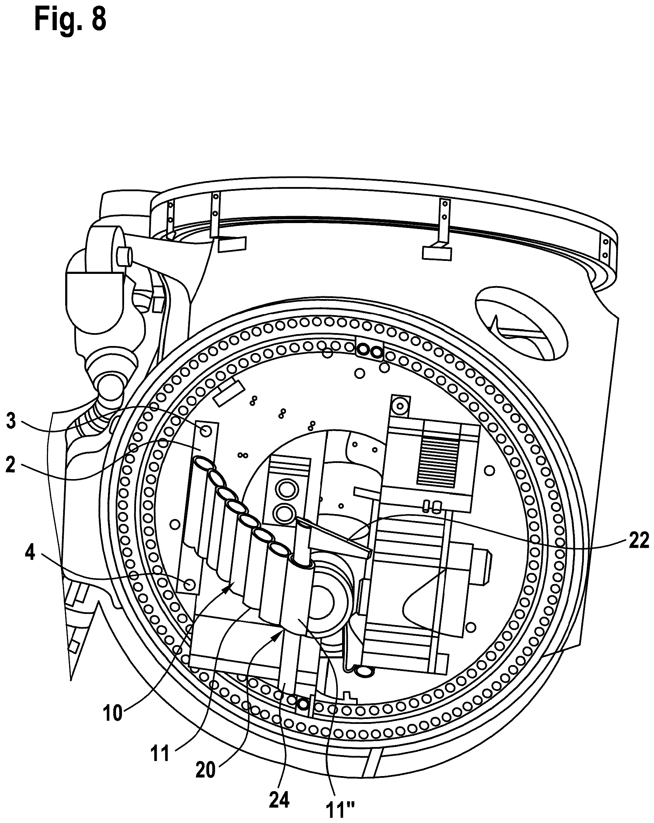

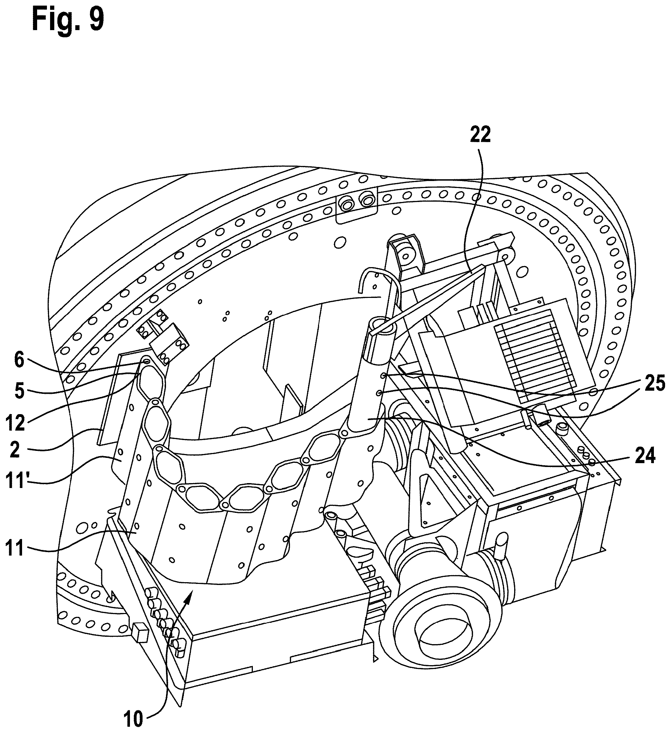

The figures 3-7 and 8 to 9 show use cases of the two embodiments shown in figures 1 and 2 respectively. In this use case, the lifting gear 1 is used for exchanging components 93 for Hot-Air-De-Icing (HAD) of a rotor blade. In figures 3-9, only the rotor hub 90 of the wind energy turbine (not depicted as such) as well the blade root platform 91 of the rotor blades, but not the rotor blades themselves are shown in order to show the respective lifting gear 1.

Due to the pivotable connection between the mounting element 2, the individual segments 11, 11', 11" of the series of segments 11 and the attachment element 20, the latter can be freely moved and oriented in a horizontal plane while at the same time lifting a component 93 attached thereto. In the shown use case, the lifting gear 1 thus facilitates the passing of the components 93 through the access hole 92 in the blade root platform 91. Because the mounting element 2 can compensate any potential deviation of the blade root platform 91 from a prescribed maintenance position by utilizing the adjustable lower fixing point 4 for correct alignment of the mounting element 2, it can be ensured that the lifting gear 1 does not swivel unintentionally due to gravity influence.

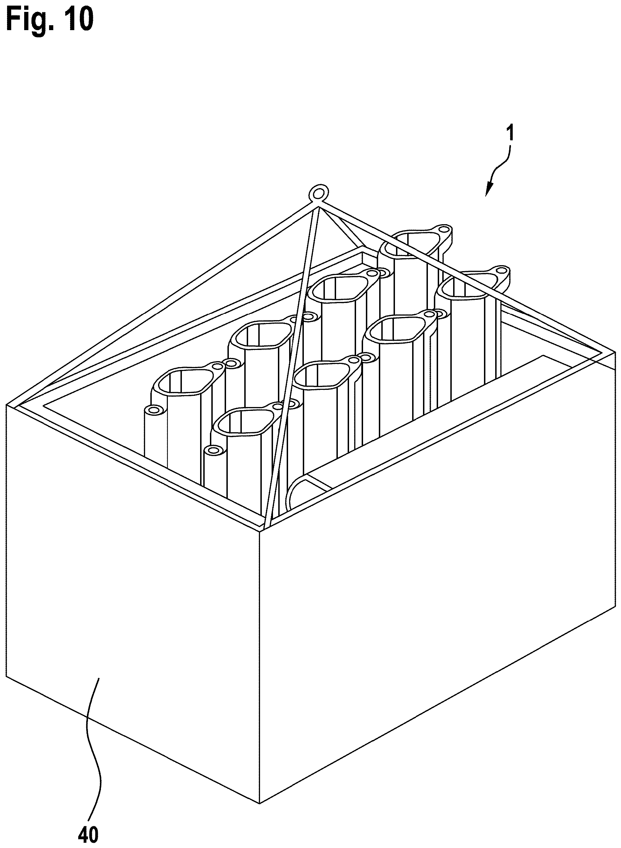

Due to the design of the pivotal connection between the various elements 2, 20 and the segments 11, the lift gear 1 as shown in all previous figures can be easily disassembled tool-free. For this, starting from the attachment element 20, the elements 2, 20 and segments 11 can be lifted individually or in groups to disengage them from the adjacent elements 2 or segments 11 closer to the mounting element 2. As shown in figure 10, in its disassembled state, the lifting gear 1 fits into a transport box 40, which is of a sufficiently small size to be easily handled and transported to and from the nacelle of a wind energy turbine through its tower.

## Claims

1. Lifting gear (1) for use in the confined spaces of a rotor hub and/or the blade roots of a wind energy turbine, comprising a mounting element (2) and an attachment element (20) for attaching a lifting tool, wherein the mounting element (2) and the attachment element (20) are connected by a series (10) of vertically extending segments (11), wherein adjacent segments (11) are interconnected pivotally in a horizontal plane for the attachment element (20) being freely movable and alignable in a horizontal plane in respect to the mounting element (2),
**characterized in that**
the mounting element (2) comprises an upper fixing point (3) and a lower fixing point (4), wherein position of the lower fixing point (4) relative of to the upper fixing point (3) is adjustable along a circular path around the upper fixing point (3).

2. Lifting gear according to claim 1,
**characterized in that**
the mounting element (2) comprises a number of alternative lower fixing points (4) arranged on a circular path around the upper fixing point (3).

3. Lifting gear according to claim 1,
**characterized in that**
wherein the lower fixing point (4) is arranged on a movable lower fixing element (4'), which is freely lockable in any position along a circular path around the upper fixing point (3).

4. Lifting gear according to any one of the preceding claims claim 1,
**characterized in that**
the segments (11) are generally tubular with connecting elements (12, 13) on opposite sides of the outer circumference for pivotally interconnecting adjacent segments (11).

5. Lifting gear according to any one of the preceding claims,
**characterized in that**
the segments (11) each comprise as least one, preferably at least two coaxial pivot pins (13) facing the same direction and a corresponding number of bushings (12) with an open end for receiving the pivot pins (13) of an adjacent segment (11) as connecting elements.

6. Lifting gear according to any one of the preceding claims,
**characterized in that**
the first segment (11') is pivotally connected to the mounting element (2) and/or the last segment (11") is pivotally connected to the attachment element (20), wherein preferable the mounting element (2) and/or the attachment element (20) are configured to interact with the connecting elements (12, 13) of the first and/or last segment (11', 11") to provide said pivotal connection.

7. Lifting gear according to any one of the preceding claims,
**characterized in that**
the attachment element (20) comprises a cylindrical section (24) to be introduced into a tubular part of the last segment (11"), wherein the attachment element (20) preferably is rotatably mountable in the last segment (11").

8. Lifting gear according to any one of the preceding claims,
**characterized in that**
the attachment element (20) is height-adjustable.

9. Lifting gear according to any one of the preceding claims,
**characterized in that**
the relative position of two adjacent segments (11) is electively lockable.

10. Lifting gear according to any one of the preceding claims,
**characterized in that**
a hand lifting device, preferably a hand chain hoist, is provided on the attachment element (20).

11. Lifting gear according to any one of the preceding claims,
**characterized in that**
adjacent segment (11) are detachable from each other tool-less.

## Patentansprüche

1. Hebezeug (1) zur Verwendung in den beengten Räumen einer Rotornabe und/oder der Schaufelwurzeln einer Windkraftanlage, umfassend ein Montageelement (2) und ein Anbringelement (20) zum Anbringen eines Hebewerkzeugs, wobei das Montageelement (2) und das Anbringelement (20) über eine Reihe (10) von sich vertikal erstreckenden Segmenten (11) verbunden sind, wobei benachbarte Segmente (11) schwenkbar in einer horizontalen Ebene miteinander verbunden sind, so dass das Anbringelement (20) in einer horizontalen Ebene bezüglich des Montageelements (2) frei beweglich und ausrichtbar ist,
**dadurch gekennzeichnet, dass**
das Montageelement (2) einen oberen Fixierpunkt (3) und einen unteren Fixierpunkt (4) umfasst, wobei die Position des unteren Fixierpunkts (4) bezüglich des oberen Fixierpunkts (3) entlang einer Kreisbahn um den oberen Fixierpunkt (3) herum verstellbar ist.

2. Hebezeug nach Anspruch 1,
**dadurch gekennzeichnet, dass**
das Montageelement (2) mehrere alternative untere Fixierpunkte (4) umfasst, die auf einer Kreisbahn um den oberen Fixierpunkt (3) herum angeordnet sind.

3. Hebezeug nach Anspruch 1,
**dadurch gekennzeichnet, dass**
wobei der untere Fixierpunkt (4) an einem beweglichen unteren Fixierelement (4') angeordnet ist, das in einer beliebigen Position entlang einer Kreisbahn um den oberen Fixierpunkt (3) herum frei verriegelbar ist.

4. Hebezeug nach einem der vorhergehenden Ansprüche Anspruch 1,
**dadurch gekennzeichnet, dass** die Segmente (11) allgemein rohrförmig sind, mit Verbindungselementen (12, 13) an gegenüberliegenden Seiten des äußeren Umfangs zum schwenkbaren Verbinden benachbarter Segmente (11).

5. Hebezeug nach einem der vorhergehenden Ansprüche, **dadurch gekennzeichnet, dass**
die Segmente (11) jeweils mindestens einen, vorzugsweise mindestens zwei koaxiale Drehzapfen (13), die in dieselbe Richtung weisen, und eine entsprechende Zahl von Buchsen (12) mit einem offenen Ende zur Aufnahme der Drehzapfen (13) eines benachbarten Segments (11) als Verbindungselemente umfassen.

6. Hebezeug nach einem der vorhergehenden Ansprüche, **dadurch gekennzeichnet, dass**
das erste Segment (11') schwenkbar mit dem Montageelement (2) verbunden ist und/oder das letzte Segment (11") schwenkbar mit dem Anbringelement (20) verbunden ist, wobei vorzugsweise das Montageelement (2) und/oder das Anbringelement (20) dazu ausgestaltet sind, mit den Verbindungselementen (12, 13) des ersten und/oder des letzten Segments (11', 11") zusammenzuwirken, um die Schwenkverbindung bereitzustellen.

7. Hebezeug nach einem der vorhergehenden Ansprüche, **dadurch gekennzeichnet, dass**
das Anbringelement (20) einen zylindrischen Abschnitt (24) umfasst, der in einen rohrförmigen Teil des letzten Segments (11") einzuführen ist, wobei das Anbringelement (20) vorzugsweise drehbar in dem letzten Segment (11") montierbar ist.

8. Hebezeug nach einem der vorhergehenden Ansprüche, **dadurch gekennzeichnet, dass**
das Anbringelement (20) höhenverstellbar ist.

9. Hebezeug nach einem der vorhergehenden Ansprüche, **dadurch gekennzeichnet, dass**
die Relativposition zweier benachbarter Segmente (11) gezielt verriegelbar ist.

10. Hebezeug nach einem der vorhergehenden Ansprüche, **dadurch gekennzeichnet, dass**
eine Handhebevorrichtung, vorzugsweise ein Flaschenzug, an dem Anbringelement (20) vorgesehen ist.

11. Hebezeug nach einem der vorhergehenden Ansprüche, **dadurch gekennzeichnet, dass**
benachbarte Segmente (11) ohne Werkzeug voneinander ablösbar sind.

## Revendications

1. Engrenage de levage (1) pour une utilisation dans les espaces confinés d'un moyeu de rotor et/ou des pieds de pale d'une turbine éolienne, comprenant un élément de montage (2) et un élément de fixation (20) pour la fixation d'un outil de levage, l'élément de montage (2) et l'élément de fixation (20) étant reliés par une série (10) de segments (11) s'étendant verticalement,
des segments (11) adjacents étant reliés entre eux de manière pivotante dans un plan horizontal pour que l'élément de fixation (20) puisse librement être déplacé et aligné dans un plan horizontal par rapport à l'élément de montage (2),
**caractérisé en ce que**
l'élément de montage (2) comprend un point de fixation supérieur (3) et un point de fixation inférieur (4), la position du point de fixation inférieur (4) par rapport au point de fixation supérieur (3) étant réglable le long d'une trajectoire circulaire autour du point de fixation supérieur (3).

2. Engrenage de levage selon la revendication 1,
**caractérisé en ce que**
l'élément de montage (2) comprend un certain nombre d'autres points de fixation inférieurs (4) disposés sur une trajectoire circulaire autour du point de fixation supérieur (3).

3. Engrenage de levage selon la revendication 1,
**caractérisé en ce que**
le point de fixation inférieur (4) est disposé sur un élément de fixation inférieur mobile (4'), qui peut être verrouillé librement dans toute position le long d'une trajectoire circulaire autour du point de fixation supérieur (3).

4. Engrenage de levage selon l'une quelconque des revendications précédentes la revendication 1,
**caractérisé en ce que**
les segments (11) sont généralement tubulaires avec des éléments de liaison (12, 13) sur les côtés opposés de la circonférence extérieure pour relier entre eux de manière pivotante des segments (11) adjacents.

5. Engrenage de levage selon l'une quelconque des revendications précédentes,
**caractérisé en ce que**
les segments (11) comprennent chacun au moins un, de préférence au moins deux pivots (13) coaxiaux orientés dans la même direction et un nombre correspondant de douilles (12) avec une extrémité ouverte pour recevoir les pivots (13) d'un segment (11) adjacent comme éléments de liaison.

6. Engrenage de levage selon l'une quelconque des revendications précédentes,
**caractérisé en ce que**
le premier segment (11') est relié de manière pivotante à l'élément de montage (2) et/ou le dernier segment (11") est relié de manière pivotante à l'élément de fixation (20), de préférence l'élément de montage (2) et/ou l'élément de fixation (20) étant conçus pour interagir avec les éléments de liaison (12, 13) du premier et/ou du dernier segment (11', 11'') pour fournir ladite liaison pivotante.

7. Engrenage de levage selon l'une quelconque des revendications précédentes,
**caractérisé en ce que**
l'élément de fixation (20) comprend une section cylindrique (24) destinée à être introduite dans une partie tubulaire du dernier segment (11"), l'élément de fixation (20) pouvant de préférence être monté de manière rotative dans le dernier segment (11").

8. Engrenage de levage selon l'une quelconque des revendications précédentes,
**caractérisé en ce que**
l'élément de fixation (20) est réglable en hauteur.

9. Engrenage de levage selon l'une quelconque des revendications précédentes,
**caractérisé en ce que**
la position relative de deux segments (11) adjacents est facultativement verrouillable.

10. Engrenage de levage selon l'une quelconque des revendications précédentes,
**caractérisé en ce que**
un dispositif de levage manuel, de préférence un palan à chaîne manuel, est disposé sur l'élément de fixation (20).

11. Engrenage de levage selon l'une quelconque des revendications précédentes,
**caractérisé en ce que**
les segments (11) adjacents peuvent être détachés les uns des autres sans outil.
